# EUROPÄISCHE PATENTSCHRIFT

(11) **EP 2 496 329 B1**
(45) Veröffentlichungstag und Bekanntmachung des Hinweises auf die Patenterteilung: **15.07.2020**
(21) Anmeldenummer: 10763708.4
(22) Anmeldetag: 12.10.2010
(51) Int. Cl.: B01D 27/08, B01D 35/153, B01D 36/00

(54) **WECHSELFILTERELEMENT, SYSTEMFESTES FILTERTEIL UND FILTERSYSTEM**
EXCHANGEABLE FILTER ELEMENT, FILTER PART FIXED WITH RESPECT TO SYSTEM, AND FILTER SYSTEM
ELÉMENT FILTRANT INTERCHANGEABLE, PARTIE DE FILTRE FIXÉE À DEMEURE SUR LE SYSTÈME ET SYSTÈME DE FILTRATION

(30) Priorität: 03.11.2009 DE 102009051696
(43) Veröffentlichungstag der Anmeldung: 12.09.2012
(73) Patentinhaber: Mann + Hummel GmbH, 71636 Ludwigsburg (DE)
(72) Erfinder: ZHU, Yihao, 71640 Ludwigsburg (DE); VAN UFFELEN, Florentin, 71638 Ludwigsburg (DE)
(74) Vertreter: Horn Kleimann Waitzhofer Patentanwälte PartG mbB
(86) Internationale Anmeldenummer: PCT/EP2010/065244
(87) Internationale Veröffentlichungsnummer: WO 2011/054627

(56) Entgegenhaltungen:
- EP-A1- 1 949 950
- DE-A1-102009 030 561
- DE-C1- 3 941 831

## Beschreibung

### Technisches Gebiet

Die Erfindung betrifft ein Wechselfilterelement für den stehenden Einbau in einem Filtersystem für Flüssigkeiten, insbesondere Öl, Kraftstoff oder Wasser, insbesondere eines Kraftfahrzeuges, umfassend ein Filtergehäuse mit einer Stirnwand, an der ein zentraler Anschlussstutzen befestigt ist.

Ferner betrifft die Erfindung ein systemfestes Filterteil eines Filtersystems für Flüssigkeiten, insbesondere Öl, Kraftstoff oder Wasser, insbesondere eines Kraftfahrzeuges, mit dem ein Wechselfilterelement stehend verbindbar ist, mit einem Zulauf für die zu reinigende Flüssigkeit und einem Ablauf für die gereinigte Flüssigkeit, wobei das systemfeste Filterteil über eine Aufnahme verfügt, in die ein Anschlussstutzen des Wechselfilterelements einbaubar ist.

Außerdem betrifft die Erfindung ein Filtersystem für Flüssigkeiten, insbesondere für Öl, Kraftstoff oder Wasser, insbesondere eines Kraftfahrzeuges, aufweisend ein systemfestes Filterteil mit einem Zulauf für die zu reinigende Flüssigkeit und einem Ablauf für die gereinigte Flüssigkeit, und ein Wechselfilterelement, das in eine Aufnahme des systemfesten Filterteils austauschbar eingebaut ist.

### Stand der Technik

Im Ölkreislauf von marktbekannten Kraftfahrzeugmotoren werden Ölfilter mit einem Wechselfilterelement eingesetzt, wobei das Wechselfilterelement in bestimmten Wartungsintervallen auszutauschen ist. Beim sogenannten stehenden Einbau wird das Wechselfilterelement in Schwerkraftrichtung von oben in einen systemfesten Filterkopf, eingesetzt beziehungsweise nach oben ausgebaut. Das Filtergehäuse des Wechselfilterelements weist hierzu eine in Schwerkraftrichtung untere Stirnwand mit einem zentralen Anschlussstutzen auf, der im montierten Zustand in eine Aufnahme des Filterkopfs eingesteckt ist. Der Filterkopf umfasst einen Zulauf und einen Ablauf für das durch das Wechselfilterelement hindurch geleitete Öl. Bei der Entnahme des gebrauchten und noch mit Öl gefüllten Wechselfilterelements kann aus einem Bereich zwischen der Stirnwand des Wechselfilterelements und der Aufnahme des Filterkopfs Öl austreten, welches den Motorraum verschmutzen kann.

In der EP 1 949 950 A1 ist ein Wechselfilterelement für flüssige Betriebsmittel eines Kraftfahrzeugs offenbart, das in einer systemfesten Aufnahme anordenbar ist und bodenseitig einen Verschluss aufweist, der verhindert, dass bei einem Filterwechsel Öl durch den Ablass nach unten austritt.

Die als Stand der Technik nach Art. 54(3) EPÜ geltende EP 2 910 289 A1 offenbart eine Filtereinrichtung mit einem Gehäuse für ein Ringfilterelement, wobei das Gehäuse eine Belüftungsöffnung aufweist.

Der Erfindung liegt die Aufgabe zugrunde, ein Wechselfilterelement, ein systemfestes Filterteil, insbesondere einen Filterkopf, und ein Filtersystem der eingangs genannten Gattung derart weiterzubilden, dass ein Flüssigkeitsaustritt insbesondere beim Ausbau des gebrauchten Wechselfilterelements einfach vermieden wird.

### Offenbarung der Erfindung

Diese Aufgabe wird erfindungsgemäß durch ein Wechselfilterelement mit den Merkmalen des Anspruchs 1 gelöst, wobei eine umlaufende Ringdichtung so ausgestaltet ist, dass sie bei eingebautem Wechselfilterelement einen Be- und/oder Entlüftungskanal einer systemfesten Aufnahme für den Anschlussstutzen verschließt.

Das erfindungsgemäße Wechselfilterelement dient der Reinigung von Flüssigkeiten, wie beispielsweise Öl, Wasser oder Kraftstoff. Insbesondere ist der Flüssigkeitsfilter zur Reinigung von Schmieröl einer Brennkraftmaschine vorgesehen. Das Wechselfilterelement kann aber auch zur Reinigung von Wasser in andersartigen wasserführenden geschlossenen oder offenen Systemen, beispielsweise Trinkwasseranlagen, Brauchwasseranlagen, Heizwasseranlagen, Kühlwasseranlagen oder Kesselwasseranlagen eingesetzt werden. Das Wechselfilterelement wird als eine Einheit an ein entsprechend gestaltetes systemfestes Filterteil montiert. Im Falle eines Filterwechsels wird das Wechselfilterelement als Einheit entfernt und durch ein neues Wechselfilterelement ersetzt. Das erfindungsgemäße Wechselfilterelement ist bei einer im Wesentlichen stehenden Einbaulage, also bei nach unten weisenden Öffnungen im Filtergehäuse, besonders vorteilhaft, da Verunreinigungen der Umgebung durch austretende Flüssigkeit weitgehend verhindert werden. Erfindungsgemäß verhindert die Ringdichtung bei der Entnahme des Wechselfilterelements einen Flüssigkeitsaustritt im Bereich der Verbindungsstelle zwischen dem Anschlussstutzen und der Stirnwand des Filtergehäuses. Die im Inneren des Filtergehäuses angesammelte Altflüssigkeit kann lediglich durch den Anschlussstutzen ablaufen. Dies ist jedoch erst dann möglich, wenn das Wechselfilterelement so weit aus der Aufnahme des systemfesten Filterteils herausgenommen ist, dass die zugehörige Ablaufsteuerung des systemfesten Filterteils geöffnet ist. Die in diesem Zustand aus dem Wechselfilterelement austretende Altflüssigkeit wird vollständig von der Ablaufsteuerung aufgenommen. Ein seitlicher Flüssigkeitsaustritt und eine Verschmutzung der Umgebung, insbesondere eines Motorraumes, sind zuverlässig vermieden. Der Be- und/oder Entlüftungskanal ist während des Ein- und Ausbauvorgangs offen, so dass ein Innenraum der Aufnahme belüftet beziehungsweise entlüftet wird und ein Druckausgleich zur Umgebung stattfindet. Beim Einbau des Anschlussstutzens wird im Innenraum der Aufnahme, der zur Aufnahme des Anschlussstutzens dient, vorhandene Luft vom Anschlussstutzen verdrängt und über den Be- und/oder Entlüftungskanal abgeführt. Beim Ausbau wird entsprechend Umgebungsluft über den Be- und/oder Entlüftungskanal dem Innenraum zugeführt. Der Druckausgleich dient auch der Verhinderung eines Austritts von Altflüssigkeit in die Umgebung. In der Einbauendlage des Wechselfilterelements wird der Be- und/oder Entlüftungskanal mit der Ringdichtung zum Innenraum hin automatisch dicht verschlossen.

An der Stirnwand ist ein umlaufender Dichtring mit einer Anlagefläche angeordnet. Die Anlagefläche des Dichtrings kann im montierten Zustand an einer Dichtfläche des systemfesten Filterteils dichtend anliegen.

Bei einer weiteren vorteilhaften Ausführungsform kann die Ringdichtung insbesondere zum Ein- und Ausbau des Wechselfilterelements wenigstens axial relativ zum Anschlussstutzen verschiebbar sein. Dies ist insbesondere bei Verwendung eines Anschlussstutzens vorteilhaft, welcher beim Ein- und Ausbau des Wechselfilterelements relativ zur Stirnwand des Filtergehäuses verschiebbar ist. Mit einem derartig verschiebbaren Anschlussstutzen können Toleranzen beim Einbau ausgeglichen werden, so dass immer ein ausreichender Anpressdruck zur Abdichtung vorherrscht.

Vorteilhafterweise kann der zentrale Anschlussstutzen mittels Rastlaschen oder Schnappwänden in eine mittige Öffnung der Stirnwand eingerastet sein, wobei die Rastlaschen beziehungsweise Schnappwände vollständig von der Ringdichtung übergriffen sind. Die einzelnen Rastlaschen oder Schnappwände sind zwar durch fluiddurchlässige freie Bereiche voneinander getrennt. Da diese jedoch vollständig von der Ringdichtung umschlossen sind, ist hier ein unerwünschter Flüssigkeitsaustritt zuverlässig vermieden. Gleichzeitig ist eine einfache und effiziente Montage sowie sichere Halterung des Anschlussstutzens am Filtergehäuse möglich.

Der Anschlussstutzen und die Stirnwand können vorteilhafterweise auch dicht miteinander verbunden sein, und die Ringdichtung kann ein separates Bauteil, insbesondere einen O-Ring, sein. Eine separate Dichtung zwischen dem Anschlussstutzen und der Stirnwand ist so nicht erforderlich. Die Ringdichtung dient dann im Wesentlichen zum Verschließen des Be- und/oder Entlüftungskanal.

Bei einer weiteren vorteilhaften Ausführungsform kann die Ringdichtung wenigstens bereichsweise in radialer Richtung dichtend an einer Stutzen-Dichtfläche des Anschlussstutzens anliegen. Auf diese Weise kann die Ringdichtung zusätzlich den Anschlussstutzen gegen einen Innenraum der Aufnahme abdichten.

Die Stutzen-Dichtfläche kann vorteilhafterweise eine umlaufende Umfangsfläche des Anschlussstutzens sein. Bevorzugt hat die Stutzen-Dichtfläche eine zylindrische Form. Auf diese Weise kann die Ringdichtung beim Einstecken und beim Herausziehen des Anschlussstutzens in axialer Richtung in die beziehungsweise aus der vorzugsweise zylindrische Aufnahme des systemfesten Filterteils flächig an der Stutzen-Dichtfläche und an einer entsprechenden Innenfläche der Aufnahme anliegen. Auf diese Weise wird das Anliegen der Ringdichtung in der Aufnahme verbessert.

Bei einer weiteren vorteilhaften Ausführungsform kann bei eingebautem Wechselfilterelement eine Öffnung des Be- und/oder Entlüftungskanals zu einem Innenraum der Aufnahme räumlich höher liegen als eine Ablassöffnung des Innenraums für die Flüssigkeiten. So wird sichergestellt, dass die Flüssigkeiten, die sich unten im Innenraum sammeln, nur durch die Ablassöffnung abfließen können. In den Be- und/oder Entlüftungskanal kann keine Flüssigkeit gelangen.

Bei einer weiteren vorteilhaften Ausführungsform kann die Ringdichtung aus einem bei Gebrauchstemperatur im Wesentlichen starren Material, insbesondere einem Thermoplast, sein. Starre Ringdichtungen können einfacher und kostengünstiger hergestellt werden als elastische Ringdichtungen. Ferner kann die starre Ringdichtung zusätzliche Führungsfunktionen beim Einbau beziehungsweise Ausbau des Wechselfilterelements erfüllen. Die Verwendung einer starren Ringdichtung verringert darüber hinaus das Risiko, dass das Wechselfilterelement falsch montiert wird und dabei die Ringdichtung gequetscht und in ihrer Funktion beeinträchtigt wird. Thermoplaste sind preiswerte Werkstoffe und können einfach bei höheren Temperaturen ohne chemische Veränderung erweicht und in die gewünschte Form gebracht werden.

Die Aufgabe wird erfindungsgemäß ferner durch das systemfeste Filterteil nach Anspruch 9 gelöst, bei dem die Aufnahme einen Be- und/oder Entlüftungskanal aufweist, der sich zumindest axial zur Aufnahme erstreckt, wenigstens bereichsweise zu einem Innenraum der Aufnahme hin offen ist und der mit einer umlaufenden Ringdichtung insbesondere eines erfindungsgemäßen Wechselfilterelements gegenüber einem Innenraum der Aufnahme verschlossen werden kann. Der Be- und/oder der Entlüftungskanal ermöglicht beim Einbau und beim Ausbau des Anschlussstutzens einen Druckausgleich des Innenraums der Aufnahme mit der Umgebung. Auf diese Weise kann Flüssigkeit, die sich im Innenraum der Aufnahme befindet, insbesondere mittels einer zugehörigen Ablaufsteuerung des systemfesten Filterteils, optimal abgeführt werden. Dies verhindert den Austritt von Flüssigkeit in die Umgebung. In der Einbauendlage des Wechselfilterelements verschließt die Ringdichtung den Be- und Entlüftungskanal dicht, so dass keine Flüssigkeit in die Umgebung entweichen kann.

Außerdem wird die Aufgabe erfindungsgemäß gelöst durch ein Filtersystem nach Anspruch 10, bei dem ein erfindungsgemäßes Wechselfilterelement mit einem systemfesten Filterteil verbunden ist. Die oben im Zusammenhang mit dem erfindungsgemäßen Wechselfilterelement und dem erfindungsgemäßen systemfesten Filterteil aufgezählten Vorteile gelten für das Filtersystem entsprechend.

### Kurze Beschreibung der Zeichnungen

Weitere Vorteile, Merkmale und Einzelheiten der Erfindung ergeben sich aus der nachfolgenden Beschreibung, in der Ausführungsbeispiele der Erfindung anhand der Zeichnung näher erläutert werden. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen:
- Figur 1: schematisch einen Ausschnitt eines Filtersystems für Flüssigkeiten gemäß einem ersten Ausführungsbeispiel im Halbschnitt;
- Figur 2: schematisch einen Filterkopf des Filtersystems aus Figur 1 im Halbschnitt;
- Figur 3: schematisch den Filterkopf aus den Figuren 1 und 2 in Draufsicht;
- Figur 4: schematisch einen Ausschnitt eines Filtersystems für Flüssigkeiten gemäß einem zweiten Ausführungsbeispiel, welches zum ersten Ausführungsbeispiel ähnlich ist, in isometrischer Ansicht im Halbschnitt.

In den Figuren sind gleiche Bauteile mit gleichen Bezugszeichen versehen.

### Ausführungsform(en) der Erfindung

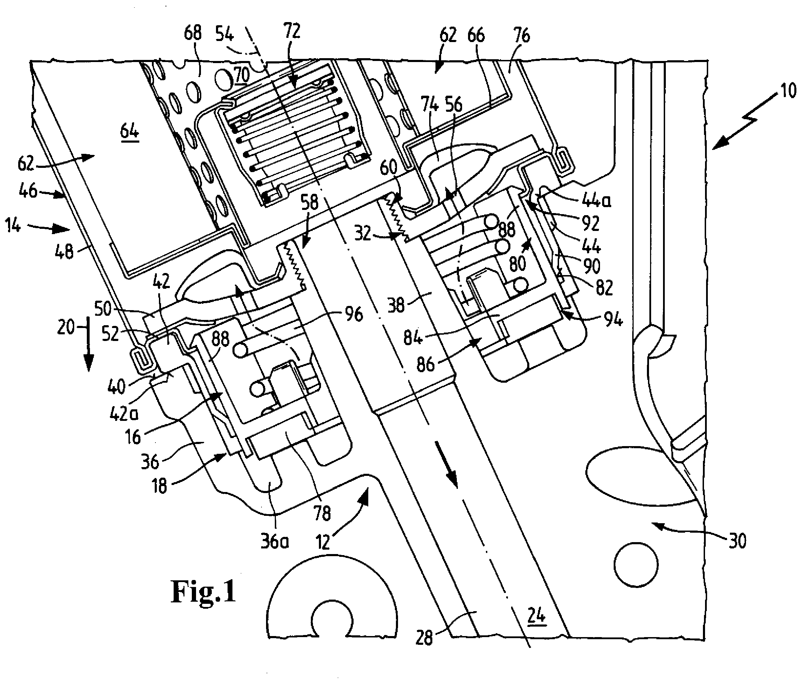

In Figur 1 ist ein Ausschnitt eines Filtersystems 10 für Flüssigkeiten gemäß einem ersten Ausführungsbeispiel im Halbschnitt dargestellt.

Das Filtersystem 10 wird eingesetzt zu Filtrierung von Motoröl im Ölkreislauf einer Brennkraftmaschine eines Kraftfahrzeugs.

Das Filtersystem 10 verfügt über einen systemfesten Filterkopf 12 und ein Wechselfilterelement 14, das mit einem Anschlussstutzen 16 in eine Aufnahme 18 des Filterkopfs 12 austauschbar eingesteckt ist.

Das Wechselfilterelement 14 ist für den stehenden Einbau vorgesehen. Mit stehendem Einbau ist auch ein leicht schräger Einbau gemeint, wie er in der Figur 1 gezeigt ist. Eine in gewöhnlicher Montageposition wirkende Gewichtskraft ist durch einen Pfeil 20 angegeben. Demnach liegt der Anschlussstutzen 16 in der vorgesehenen Einbaulage bezogen auf die Gewichtskraftrichtung unten.

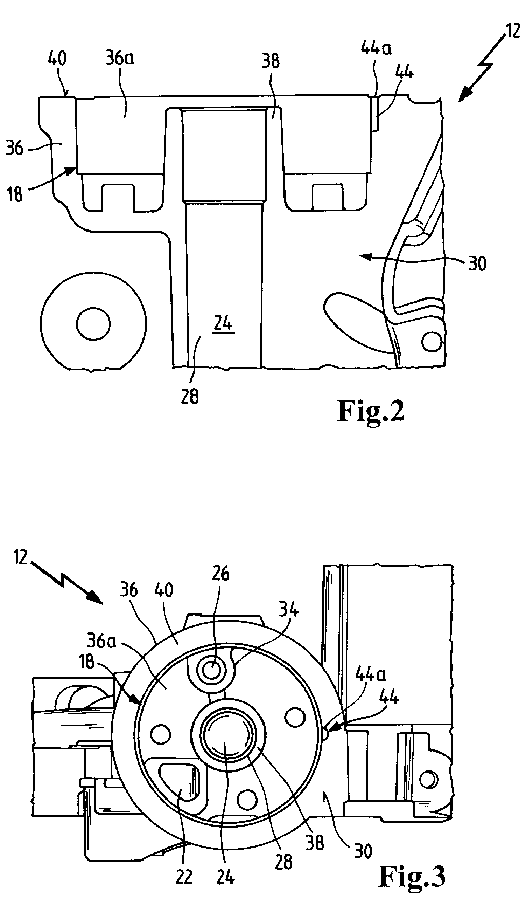

Der Filterkopf 12 ist in den Figuren 2 und 3 im Detail dargestellt. Der Filterkopf 12 weist einen in der Figur 3 gezeigten Zulauf 22 für das zu reinigende Motoröl, einen Ablauf 24 für das gereinigte Motoröl, sowie eine in der Figur 3 gezeigte Ablassbohrung 26 auf.

Der Ablauf 24 ist als mehrfach abgestuftes Rohr 28 ausgebildet, welches in ein Basisteil 30 des Filterkopfs 12 integriert ist. Im Bereich seines dem Wechselfilterelement 14 zugewandten freien Endes verfügt das Rohr 28 über ein Außengewinde 32. In der Figur 2 ist der Abschnitt des Rohres 28 mit dem Außengewinde 32 der besseren Übersichtlichkeit wegen nicht dargestellt.

Die Ablassbohrung 26 ist in einem Auge angeordnet, das in der Figur 3 gezeigt ist. Das Auge ragt in axialer Richtung über das Niveau des Zulaufs 22. Das Rohr 28 ragt in axialer Richtung über einen Ringkragen 36 der Aufnahme 18 hinaus, welcher den Zulauf 22 und die Ablassbohrung 26 umschließt. Im Innenraum 36a des Ringkragens 36 ist das Rohr 28 von einem Zylinderstutzen 38 umgeben. Stirnseitig weist der Ringkragen 36 eine Dichtfläche 40 auf, auf welcher ein Dichtring 42 des Wechselfilterelements 14 aufliegt. Der Dichtring 42 bildet die Abdichtung zwischen dem Filterkopf 12 und dem Wechselfilterelement 14.

Der Ringkragen 36 weist im oberen Bereich seiner radial inneren Umfangsseite einen Be- und Entlüftungskanal 44 auf, der zur Dichtfläche 40 des Ringkragens 36 hin eine Öffnung 44a hat. Der Be- und Entlüftungskanal 44 erstreckt sich rinnenförmig axial zum Ringkragen 36 und ist über seine gesamte Länge zum Innenraum 36a des Ringkragens 36 hin offen. Bei eingebautem Wechselfilterelement 14 liegt die Öffnung 44a des Be- und/oder Entlüftungskanals 44 zum Innenraum 36a räumlich höher als die Ablassbohrung 26 für das im Innenraum 36a gesammelte Motoröl.

Das Wechselfilterelement 14 umfasst ein Filtergehäuse 46, welches durch einen Topf 48, einen Deckel 50 und einen Dichtungshalter 52 gebildet ist. Der Deckel 50 und der Dichtungshalter 52 bilden eine Stirnwand des Wechselfilterelements 14. Das Wechselfilterelement 14 ist im Wesentlichen rotationssymmetrisch zu einer Längsachse 54 aufgebaut. Der zentrale Anschlussstutzen 16 ist zentrisch zur Längsachse 54 radial innenseitig des Dichtrings 42 derart an dem Dichtungshalter 52 befestigt, dass der Dichtring 42 um den Anschlussstutzen 16 herumläuft.

Der Dichtungshalter 52 besteht aus einem dünnen Metallblech, welches im Außenbereich mit dem Topf 48, welcher ebenfalls aus einem Metallblech besteht, dichtend verbördelt ist.

Der Dichtungshalter 52 ist derart ausgebildet, dass er eine Dichtungsaufnahme für den Dichtring 42 bildet. Der Dichtungshalter 52 ist unlösbar mit dem Deckel 50 verbunden. In dem Deckel 50 sind Einlassöffnungen 56 verteilt angeordnet. Weiterhin verfügt der Deckel 50 über einen zentral angeordneten Auslass 58. Ein zylindrischer Anschnitt des Deckels 50 verfügt über ein Innengewinde 60, mit welchem das Wechselfilterelement 14 an dem Außengewinde 32 des Rohrs 28 des Filterkopfs 12 fixiert wird.

Im Inneren des Wechselfilterelements 14 ist ein Filterbalg 62 angeordnet. Der Filterbalg 62 besitzt ein gefaltetes und ringförmig geschlossenes Filtermedium 64, welches an seinen Stirnseiten mit einer oberen Endscheibe und einer unteren Endscheibe 66, dichtend verbunden ist. In der Figur 1 ist nur die untere Endscheibe 66 gezeigt.

Der Filterbalg 62 verfügt reinseitig über ein gelochtes Stützrohr 68. An der unteren Endscheibe 66 ist ein Verschlussventil 72 angeordnet, das sich axial in die von dem Filterbalg 62 umschlossene Reinseite 70 erstreckt. Das Verschlussventil 72 wird durch den Volumenstrom des Motoröls aufgedrückt, wenn das Wechselfilterelement 14 in Betrieb ist. Wenn kein ausreichender Motoröldruck in dem Wechselfilterelement 14 anliegt, schließt das Verschlussventil 72. Somit ist das Verschlussventil 72 auch dann geschlossen, wenn das Wechselfilterelement 14 gewechselt werden soll. Das reinseitig in dem Wechselfilterelement 14 enthaltene Motoröl wird so am Ausfließen gehindert.

Zwischen der unteren Endscheibe 66 und dem Deckel 50 ist eine Rücklaufsperrmembran angeordnet, welche eine dichtende Verbindung zwischen dem Deckel 50 und der Endscheibe 66 erzeugt. Weiterhin verfügt die Rücklaufsperrmembran 74 über eine Membran-Dichtlippe, welche die Einlassöffnungen 56 überdeckt. Durch den Volumenstrom des einströmenden Motoröls wird die Rücklaufsperrmembran 74 von den Einlassöffnungen 56 abgehoben und das zu reinigende Motoröl kann in eine Rohseite 76 einströmen. Wenn kein Motoröl zuströmt, liegt die Rücklaufsperrmembran 74 dichtend auf dem Deckel 50 auf, wodurch das auf der Rohseite 76 befindliche Motoröl nicht durch die Einlassöffnungen 56 ausströmen kann. Dies ist vorteilhaft, da das Wechselfilterelement 14 in stehender Position, also mit nach unten weisenden Einlassöffnungen 56 eingebaut ist. Somit kann lediglich die geringe Motorölmenge, welche sich zwischen der Rücklaufsperrmembran 74 und dem Deckel 50 befindet, auslaufen. Diese Motorölmenge wird jedoch problemlos von dem Ringkragen 36 des Filterkopfs 12 aufgenommen.

Um ein Überlaufen des Ringkragens 36 beim Filterwechsel zu verhindern, ist die Ablassbohrung 26 in dem Filterkopf 12 vorgesehen. Diese ist bei montiertem Wechselfilterelement 14 durch eine Ablass-Dichtung 78, die an dem Anschlussstutzen 16 angeordnet ist, verschlossen. Beim Ausbau wird die Ablass-Dichtung 78 von der Ablassbohrung 26 entfernt, und das Motoröl kann drucklos abfließen.

Der Anschlussstutzen 16 ist topfförmig ausgestaltet, wobei eine zylindrische Umfangswand 80 mit einer umlaufenden zylindrischen Stutzen-Dichtfläche 82 von einem quer zur Längsachse 54 liegenden Boden 84 ausgeht. Zum Deckel 50 des Wechselfilterelements 14 hin ist der Anschlussstutzen 16 offen. Im Boden 84 ist mittig zur Längsachse 54 eine Öffnung 86 vorgesehen. Im Bereich ihrer dem Boden 84 gegenüberliegenden Kante ist die Umfangswand 80 des Anschlussstutzens 16 abseits der Stutzen-Dichtfläche 82 in Form einer Mehrzahl von Schnappwänden 88 ausgebildet, die voneinander getrennt am Umfang verteilt angeordnet sind.

Die mittige Öffnung des Dichtungshalters 52 ist durch eine umlaufende Kante 92 begrenzt. Die Schnappwände 88 des Anschlussstutzens 16 greifen hinter die Kante 92, wodurch der Anschlussstutzen 16 mit dem Dichtungshalter 52 verrastet ist.

Der Dichtring 42 ist als Axialdichtung ausgestaltet, dessen Anlagefläche 42a stirnseitig des Dichtrings 42 angeordnet ist. Eine zentrisch um die Längsachse 54 umlaufende Dichtlippe 90 ist einteilig am Dichtring 42 angeformt. Dabei liegt sie radial innenseitig der Anlagefläche 42a und steht axial über die Anlagefläche 42a hervor. Die Dichtlippe 90 liegt dichtend an der Stutzen-Dichtfläche 82 des Anschlussstutzens 16 an und bildet eine Ringdichtung.

Die Dichtlippe 90 liegt radial außenseitig an der Stutzen-Dichtfläche 82 des Anschlussstutzens 16 an. In der axialen Richtung übergreift sie ausgehend von dem Dichtungshalter 52 die Schnappwände 88 und die dazwischenliegenden freien Bereiche derart vollständig, dass die Schnappwände 88 und die freien Bereiche in ihrer Gesamtheit auf der ölführenden Innenseite des Filtergehäuses 46, des Dichtrings 42, der Dichtlippe 90 und der Stutzen-Dichtfläche 82 liegen. Die einteilige Anformung der Dichtlippe 90 am Dichtring 42 verhindert, dass Motoröl aus dem Innenbereich des Anschlussstutzens 16 und des Dichtungshalters 52 und insbesondere durch die freien Bereiche zwischen den Schnappwänden 88 austritt.

Bei eingebautem Wechselfilterelement 14 verschließt die radial äußere Umfangsseite der Dichtlippe 90 die längsseitige Öffnung des Be- und Entlüftungskanals 44 gegenüber dem Innenraum 36a des Ringkragens 36. Ferner verschließt der Dichtring 42 die Öffnung 44a des Be- und Entlüftungskanals 44 in der Dichtfläche 40 des Ringkragens 36 gegenüber der Umgebung.

Beim Ausbau des Wechselfilterelements 14 gibt die Dichtlippe 90 den Be- und Entlüftungskanal 44 gegenüber dem Innenraum 36a des Ringkragens 36 sukzessive frei. Gleichzeitig gibt der Dichtring 42 die Öffnung 44a des Be- und Entlüftungskanal 44 zur Umgebung frei. Umgebungsluft kann nun dem Innenraum 36a des Ringkragens 36 zuströmen, so dass dieser belüftet wird und ein Druckausgleich mit der Umgebung stattfindet. Auf diese Weise wird das Abfließen des Motoröls über die Ablassbohrung 26 verbessert.

Beim Einbau des Wechselfilterelements 14 ist die Öffnung 44a des Be- und Entlüftungskanals 44 zur Umgebung und die Verbindung zum Innenraum 36a des Ringkragens 36 zunächst offen, so dass Luft aus dem Innenraum 36a in die Umgebung verdrängt werden kann. Auf diese Weise findet ein Druckausgleich statt, so dass der Innenraum 36a druckfrei bleibt. In der Einbauendlage des Wechselfilterelements 14 ist automatisch der Be- und Entlüftungskanal 44 mit der Dichtlippe 90 und dem Dichtring 42 dicht verschlossen.

Die Ablass-Dichtung 78 ist in einer Dichtungsnut 94 an der dem Wechselfilterelement 14 abgewandten Außenseite des Bodens 84 des Anschlussstutzens 16 angeordnet.

Um die Ablass-Dichtung 78 exakt zu positionieren, ist der Anschlussstutzen 16 relativ zum Deckel 50 in axialer Richtung verschiebbar. Die Dichtlippe 90 ist zum Ein- und Ausbau des Wechselfilterelements 14 relativ zur Stutzen-Dichtfläche 82 axial zum Anschlussstutzen 16 verschiebbar. Zwischen dem Boden 84 des Anschlussstutzens 16 und dem Deckel 50 des Wechselfilterelements 14 ist eine Spiraldruckfeder 96 angeordnet. Die Spiraldruckfeder 96 erzeugt eine Vorspannung zwischen dem Boden 84 des Anschlussstutzens 16 und dem Deckel 50 des Wechselfilterelements 14.

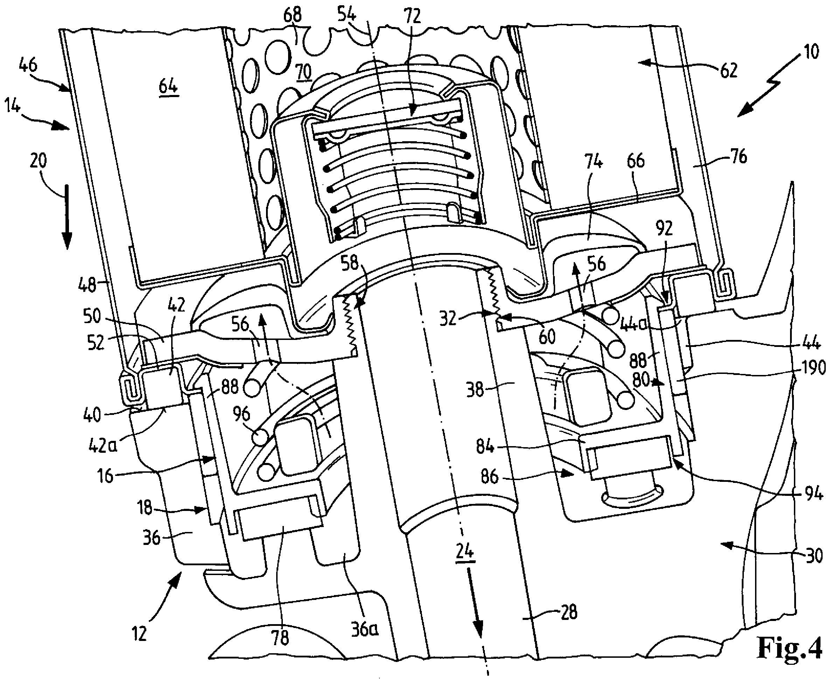

Bei einem zweiten Ausführungsbeispiel, dargestellt in der Figur 4, sind diejenigen Elemente, die zu denen des ersten, in den Figuren 1 bis 3 beschriebenen Ausführungsbeispiels ähnlich sind, mit denselben Bezugszeichen versehen, so dass bezüglich deren Beschreibung auf die Ausführungen zum ersten Ausführungsbeispiel Bezug genommen wird. Dieses Ausführungsbeispiel unterscheidet sich von dem ersten dadurch, dass statt der an dem Dichtring 42 angeformten Dichtlippe 90 beim zweiten Ausführungsbeispiel eine separate zylindrische Ringdichtung 190 vorgesehen ist. Die Ringdichtung 190 ist aus einem Thermoplast und ist bei Gebrauchstemperatur im Wesentlichen starr. Die Ringdichtung 190 ist mit einer Stirnseite an einer stirnseitigen Ringfläche des Dichtungshalters 52 befestigt, die an dessen umlaufende Kante angrenzt.

Bei allen oben beschriebenen Ausführungsbeispielen eines Filtersystems 10 für Flüssigkeiten, eines Filterkopfs 12 und eines Wechselfilterelements 14 sind unter anderem folgende Modifikationen möglich:

Die Erfindung ist nicht beschränkt auf die Verwendung bei Ölkreisläufen von Kraftfahrzeugmotoren. Vielmehr kann sie auch bei andersartigen Motoren, wie stationären Brennkraftmaschinen, verwendet werden. Die Erfindung kann auch zur Reinigung von andersartigen Flüssigkeiten, beispielsweise Kraftstoff oder Wasser eingesetzt werden. Sie kann auch in andersartigen wasserführenden geschlossenen oder offenen Systemen, beispielsweise Trinkwasseranlagen, Brauchwasseranlagen, Heizwasseranlagen, Kühlwasseranlagen oder Kesselwasseranlagen Verwendung finden.

Anstelle des Filterkopfs 12 kann auch ein andersartiges systemfestes Filterteil, beispielsweise ein Anschlussflansch, zum Anschluss des Wechselfilterelements 14 vorgesehen sein.

Alternativ zu der hier gezeigten Ausgestaltungen sind auch abweichende Bauformen mit gleicher Wirkung möglich. So kann es beispielhaft vorteilhaft sein, dass der Dichtring 42 als Radialdichtung ausgestaltet ist. Die Dichtlippe 90 oder die Ringdichtung 190 können auch zweckmäßig an einer stirnseitigen Dichtfläche des Anschlussstutzens 16 in axialer Richtung anliegen. Außerdem kann es vorteilhaft sein, die Dichtlippe 90 oder die Ringdichtung 190 radial innenseitig des Dichtrings 42 ohne axialen Versatz zur Anlagefläche anzuordnen.

Auf eine Abdichtung gegenüber dem Anschlussstutzen 16 und somit auf die Stutzen-Dichtfläche 82 kann unter Umständen auch verzichtet werden Die Dichtlippe 90 und die Ringdichtung 190 können dann so ausgestaltet sein, dass sie nicht an dem Anschlussstutzen 16 anliegen müssen.

Der Anschlussstutzen 16 kann auch dicht mit dem Deckel 50 und/oder dem Dichtungshalter 52 verbunden sein. In diesem Fall kann auf die Schnappwände 88 und eine separate Abdichtung derselben verzichtet werden. Statt der Dichtlippe 90 oder der Ringdichtung 190 kann dann eine andersartige separate Ringdichtung, beispielsweise ein O-Ring, zum Verschließen des Be- und/oder Entlüftungskanal 44 vorgesehen sein.

Das Wechselfilterelement 14 kann statt des Filterbalges 62 mit dem gefalteten und ringförmig geschlossenen Filtermedium 64 auch ein andersartiges Filterelement aufweisen.

Der Dichtungshalter 52 kann statt verbördelt auch in anderer Weise dicht mit dem Topf 48 verbunden, beispielsweise verklebt oder verschweißt, sein. Der Dichtungshalter 52 und/oder der Topf 48 können statt aus Blech auch aus Kunststoff sein.

Anstelle der Spiraldruckfeder 96 kann auch ein andersartiges Spannmittel, insbesondere eine Druckfeder, zur Erzeugung einer Vorspannung zwischen dem Boden 84 des Anschlussstutzens 16 und dem Deckel 50 des Wechselfilterelements 14 verwendet werden.

Anstelle der Schnappwände 88 kann auch eine Vielzahl von Rastlaschen vorgesehen sein, die durch Spalte voneinander getrennt sind.

Der Anschlussstutzen 16 kann auch in anderer Weise an der Stirnwand des Filtergehäuses 46 befestigt sein. Er kann auch in axialer Richtung relativ zum Filtergehäuse 46 fixiert sein. Auf die Spiraldruckfeder 96 kann dann verzichtet werden.

Die Ringdichtung 190 beim zweiten Ausführungsbeispiel kann statt aus einem Thermoplast auch aus einem andersartigen, bei Gebrauchstemperatur starren Material sein.

Der Be- und Entlüftungskanal 44 kann statt axial zum Ringkragen 36 auch mit einer axialen Richtungskomponente schräg zu diesem verlaufen.

Der Be- und Entlüftungskanal 44 kann statt über seine gesamte Länge auch nur in einem unteren Bereich zum Innenraum 36a des Ringkragens 36 hin offen sein.

Anstelle der Schraubverbindung zwischen dem Wechselfilterelement 14 und dem Filterkopf 12 kann auch eine andersartige, insbesondere Steck- und/oder Drehverbindung vorgesehen sein.

## Patentansprüche

1. Wechselfilterelement (14) für den stehenden Einbau in einem Filtersystem (10) für Flüssigkeiten, insbesondere Öl, Kraftstoff oder Wasser, insbesondere eines Kraftfahrzeuges, bei dem eine systemfeste Aufnahme (18) für das Wechselfilterelement (14) einen Be- und/oder Entlüftungskanal (44) aufweist, der sich zumindest axial zur Aufnahme (18) erstreckt und wenigstens bereichsweise zu einem Innenraum (36a) der Aufnahme (18) hin offen ist, wobei das Wechselfilterelement (14) ein Filtergehäuse (46) mit einer Stirnwand (50, 52), an der ein zentraler Anschlussstutzen (16) befestigt ist, eine umlaufende zylindrische Ringdichtung (190), die so ausgestaltet ist, dass sie bei eingebautem Wechselfilterelement (14) den Be- und/oder Entlüftungskanal (44) der systemfesten Aufnahme (18) für den Anschlussstutzen (16) verschließt und einen an der Stirnwand (50, 52) angeordneten umlaufenden Dichtring (42) mit einer Anlagefläche (42a) umfasst, wobei die umlaufende zylindrische Ringdichtung (190) ein separates Bauteil ist.

2. Wechselfilterelement nach einem der vorigen Ansprüche, **dadurch gekennzeichnet, dass** die zylindrische Ringdichtung (190) insbesondere zum Ein- und Ausbau des Wechselfilterelements (14) wenigstens axial relativ zum Anschlussstutzen (16) verschiebbar ist.

3. Wechselfilterelement nach einem der vorigen Ansprüche, **dadurch gekennzeichnet, dass** der zentrale Anschlussstutzen (16) mittels Rastlaschen oder Schnappwänden (88) in eine mittige Öffnung der Stirnwand (50, 52) eingerastet ist, wobei die Rastlaschen beziehungsweise Schnappwände (88) vollständig von der Ringdichtung (190) übergriffen sind.

4. Wechselfilterelement nach einem der Ansprüche 1 oder 2, **dadurch gekennzeichnet, dass** der Anschlussstutzen (16) und die Stirnwand (50, 52) dicht miteinander verbunden sind.

5. Wechselfilterelement nach einem der vorigen Ansprüche, **dadurch gekennzeichnet, dass** die zylindrische Ringdichtung (190) wenigstens bereichsweise in radialer Richtung dichtend an einer Stutzen-Dichtfläche (82) des Anschlussstutzens (16) anliegt.

6. Wechselfilterelement nach Anspruch 5, **dadurch gekennzeichnet, dass** die Stutzen-Dichtfläche (82) eine umlaufende Umfangsfläche des Anschlussstutzens (16) ist.

7. Wechselfilterelement nach einem der vorigen Ansprüche, **dadurch gekennzeichnet, dass** bei eingebautem Wechselfilterelement (14) eine Öffnung (44a) des Be- und/oder Entlüftungskanals (44) zu einem Innenraum (36a) der Aufnahme (18) räumlich höher liegt als eine Ablassöffnung (26) des Innenraums (36a) für die Flüssigkeiten.

8. Wechselfilterelement nach einem der vorigen Ansprüche, **dadurch gekennzeichnet, dass** die zylindrische Ringdichtung (190) aus einem bei Gebrauchstemperatur im Wesentlichen starren Material, insbesondere einem Thermoplast, ist.

9. Systemfestes Filterteil (12) eines Filtersystems (10) für Flüssigkeiten, insbesondere Öl, Kraftstoff oder Wasser, insbesondere eines Kraftfahrzeuges, mit dem ein Wechselfilterelement (14) stehend verbindbar ist, mit einem Zulauf (22) für die zu reinigende Flüssigkeit und einem als mehrfach abgestuftes Rohr (28), welches in ein Basisteil (30) des Filterteils (12) integriert ist, ausgebildeten Ablauf (24) für die gereinigte Flüssigkeit, wobei das systemfeste Filterteil (12) über eine Aufnahme (18) verfügt, in die ein Anschlussstutzen (16) des Wechselfilterelements (14) einbaubar ist, **dadurch gekennzeichnet, dass** die Aufnahme (18) einen Be- und/oder Entlüftungskanal (44) aufweist, der sich zumindest axial zur Aufnahme (18) erstreckt, der wenigstens bereichsweise zu einen Innenraum (36a) der Aufnahme (18) hin offen ist und der mit einer umlaufenden Ringdichtung (90; 190) eines Wechselfilterelements (14) nach einem der vorigen Ansprüche gegenüber einem Innenraum (36a) der Aufnahme (18) verschlossen werden kann.

10. Filtersystem (10) für Flüssigkeiten, insbesondere für Öl, Kraftstoff oder Wasser, insbesondere eines Kraftfahrzeuges, aufweisend ein systemfestes Filterteil (12) mit einem Zulauf (22) für die zu reinigende Flüssigkeit und einem Ablauf (24) für die gereinigte Flüssigkeit, und ein Wechselfilterelement (14) nach einem der vorigen Ansprüche 1 - 8, das in eine Aufnahme (18) des systemfesten Filterteils (12) austauschbar stehend eingebaut ist, wobei die Aufnahme (18) einen Be- und/oder Entlüftungskanal (44) aufweist, der sich zumindest axial zur Aufnahme (18) erstreckt und der wenigstens bereichsweise zu einen Innenraum (36a) der Aufnahme (18) hin offen ist.

## Claims

1. Exchangeable filter element (14) for an upright installation in a filter system (10) for liquids, in particular oil, fuel or water, in particular of a motor vehicle, in which a receptacle (18) fixed with the system for the exchangeable filter element (14) has an aeration and/or ventilation duct (44) which extends at least axially to the receptacle (18) and is open towards an interior (36a) of the receptacle (18) at least in some regions, the exchangeable filter element (14) comprising a filter housing (46) with an end wall (50, 52), to which a central connection pin (16) is fastened, a circumferential cylindrical annular seal (190), which is designed in such a way that it closes the aeration and/or ventilation duct (44) of the receptacle (18) fixed with the system for the connection pin (16) when the exchangeable filter element (14) is installed, and a circumferential sealing ring (42) arranged on the end wall (50, 52) having a contact surface (42a), the circumferential cylindrical annular seal (190) being a separate component.

2. Exchangeable filter element according to one of the previous claims, **characterized in that** the cylindrical annular seal (190) is at least axially displaceable relative to the connection pin (16), in particular for the installation and removal of the exchangeable filter element (14).

3. Exchangeable filter element according to one of the previous claims, **characterized in that** the central connection pin (16) is latched into a central opening of the end wall (50, 52) by means of latching tabs or snap walls (88), the latching tabs or snap walls (88) being completely covered by the annular seal (190).

4. Exchangeable filter element according to one of claims 1 or 2, **characterized in that** the connection pin (16) and the end wall (50, 52) are tightly connected to one another.

5. Exchangeable filter element according to one of the previous claims, **characterized in that** the cylindrical annular seal (190) at least in some areas rests sealingly in a radial direction against a connection pin sealing surface (82) of the connection pin (16).

6. Exchangeable filter element according to claim 5, **characterized in that** the connection pin sealing surface (82) is a circumferential surface of the connection pin (16).

7. Exchangeable filter element according to one of the previous claims, **characterized in that**, when the exchangeable filter element (14) is installed, an opening (44a) of the aeration and/or ventilation duct (44) to an interior (36a) of the receptacle (18) is spatially higher than an outlet opening (26) of the interior (36a) for the liquids.

8. Exchangeable filter element according to one of the previous claims, **characterized in that** the cylindrical annular seal (190) is made of a material which is substantially rigid at operating temperature, in particular a thermoplastic.

9. Filter part (12) of a filter system (10) fixed with the system for liquids, in particular oil, fuel or water, in particular of a motor vehicle, to which an exchangeable filter element (14) is connectable in an upright position, with an inlet (22) for the liquid to be cleaned and an outlet (24) for the cleaned liquid designed as a multi-stepped pipe (28) which is integrated into a base part (30) of the filter part (12), wherein the filter part (12) fixed with the system has a receptacle (18) into which a connection pin (16) of the exchangeable filter element (14) is installable, **characterized in that** the receptacle (18) has an aeration and/or ventilation duct (44) which extends at least axially to the receptacle (18), which is open towards an interior (36a) of the receptacle (18) at least in some regions and which is closeable by a circumferential annular seal (90; 190) of an exchangeable filter element (14) in accordance with one of the above claims with respect to an interior (36a) of the receptacle (18).

10. Filter system (10) for liquids, in particular for oil, fuel or water, in particular of a motor vehicle, comprising a filter part (12) fixed with the system having an inlet (22) for the liquid to be cleaned and an outlet (24) for the cleaned liquid, and an exchangeable filter element (14) according to one of the previous claims 1 - 8, which is installed upright in an exchangeable manner in a receptacle (18) of the filter part (12) fixed with the system, the receptacle (18) having an aeration and/or ventilation duct (44) which extends at least axially to the receptacle (18) and which is open towards an interior (36a) of the receptacle (18) at least in some regions.

## Revendications

1. Elément filtrant interchangeable (14) pour un montage vertical dans un système de filtration (10) de liquides, en particulier d'huile, de carburant ou d'eau, en particulier d'un véhicule automobile, dans lequel un logement (18) fixé au système pour l'élément filtrant interchangeable (14) comprend un canal d'aération et/ou de ventilation (44) qui s'étend au moins axialement par rapport au logement (18) et qui est ouvert au moins par endroits vers un espace intérieur (36a) du logement (18), l'élément filtrant interchangeable (14) comprenant un boîtier de filtre (46) avec une paroi frontale (50, 52) sur laquelle est fixée une buse de raccordement centrale (16), un joint annulaire cylindrique périphérique (190), qui est conçu de telle sorte qu'il ferme le canal d'aération et/ou de ventilation (44) du logement (18) fixé au système pour la buse de raccordement (16) lorsque l'élément filtrant interchangeable (14) est installé, et un joint d'étanchéité périphérique (42) disposée sur la paroi frontale (50, 52) avec une surface de contact (42a), le joint annulaire cylindrique périphérique (190) étant une pièce séparée.

2. Elément filtrant interchangeable selon l'une des revendications précédentes, **caractérisé en ce que** le joint annulaire cylindrique (190) est au moins déplaçable axialement par rapport à la buse de raccordement (16), en particulier pour le montage et le démontage de l'élément filtrant interchangeable (14).

3. Elément filtrant interchangeable selon l'une des revendications précédentes, **caractérisé en ce que** la buse de raccordement centrale (16) est clipsée dans une ouverture centrale de la paroi frontale (50, 52) au moyen de languettes de clipsage ou de parois d'encliquetage (88), les languettes de clipsage ou les parois d'encliquetage (88) étant entièrement recouvertes par le joint annulaire (190).

4. Elément filtrant interchangeable selon l'une des revendications 1 ou 2, **caractérisé en ce que** la buse de raccordement (16) et la paroi frontale (50, 52) sont reliées étroitement l'une à l'autre.

5. Elément filtrant interchangeable selon l'une des revendications précédentes, **caractérisé en ce que** le joint annulaire cylindrique (190) s'appui de manière étanche au moins par endroits dans une direction radiale contre une surface d'étanchéité (82) de la buse de raccordement (16).

6. Elément filtrant interchangeable selon la revendication 5, **caractérisé en ce que** la surface d'étanchéité (82) de la buse de raccordement est une surface périphérique de la buse de raccordement (16).

7. Elément filtrant interchangeable selon l'une des revendications précédentes, **caractérisé en ce que**, lorsque l'élément filtrant interchangeable (14) est installé, une ouverture (44a) du canal d'aération et/ou de ventilation (44) vers un intérieur (36a) du logement (18) est spatialement situé au-dessus d'un orifice de vidange (26) de l'intérieur (36a) pour les liquides.

8. Elément filtrant interchangeable selon l'une des revendications précédentes, **caractérisé en ce que** le joint annulaire cylindrique (190) est constitué d'un matériau sensiblement rigide à température d'utilisation, en particulier d'un thermoplastique.

9. Partie de filtre (12) d'un système de filtration (10) fixée au système pour des liquides, en particulier pour huile, carburant ou eau, en particulier d'un véhicule automobile, auquel un élément de filtre interchangeable (14) peut être raccordé en position verticale, avec une entrée (22) pour le liquide à nettoyer et une sortie (24) pour le liquide nettoyé, réalisée sous la forme d'un tube (28) avec plusieurs marches intégré dans une partie de base (30) de la partie de filtre (12), la partie de filtre (12) fixée au système comprenant un logement (18) dans lequel une buse de raccordement (16) de l'élément de filtre interchangeable (14) est installable, **caractérisé en ce que** le logement (18) présente un canal d'aération et/ou de ventilation (44) s'étendant au moins axialement par rapport au logement (18), est ouvert au moins par endroits vers un espace intérieur (36a) du logement (18) et est fermable par un joint annulaire périphérique (90; 190) d'un élément filtrant interchangeable (14) selon l'une des revendications précédentes par rapport à un intérieur (36a) du réceptacle (18).

10. Système de filtrage (10) pour liquides, en particulier pour huile, carburant ou eau, en particulier d'un véhicule automobile, comprenant une partie de filtre (12) fixée au système et comportant une entrée (22) pour le liquide à nettoyer et une sortie (24) pour le liquide nettoyé, et un élément de filtre interchangeable (14) selon l'une des revendications précédentes 1 - 8, qui est installé verticalement de manière interchangeable dans un logement (18) de la partie de filtre (12) fixée au système, le logement (18) comprenant un canal d'aération et/ou de ventilation (44) qui s'étend au moins axialement par rapport au logement (18) et qui est ouvert au moins par endroits vers un espace intérieur (36a) du logement (18).
